# EUROPEAN PATENT APPLICATION

(11) **EP 0 741 250 A1**
(43) Date of publication of application: **06.11.1996**
(21) Application number: 96303161.2
(22) Date of filing: 03.05.1996
(51) Int. Cl.: F16B 13/06

(54) **Fasteners**

(30) Priority: 03.05.1995 GB 9508983; 24.06.1995 GB 9512913
(71) Applicant: THE RAWLPLUG COMPANY LIMITED, Derby DE21 4XA (GB)
(72) Inventor: Wallace, Campbell T, Glasgow G44 3QX (GB)
(74) Representative: Pattullo, Norman

(57) **Abstract**

The present invention provides a fastener for mounting in a pre-drilled hole in material in order to securely fasten an article to the surface of the material in which the hole is drilled. The fastener includes at least an expander (106), a socket member and an expansible sleeve (112) which is movable relative to the expander along the shaft (102) of the fastener. The end face of the fastener is provided with an internally screw-threaded socket (116). The fastener of the invention may be set at depths exceeding those typical for conventional fasteners.

## Description

This invention relates to fasteners, and relates more particularly but not exclusively to modifications of the type of fastener known as an "anchor bolt", "throughbolt" or "expanding bolt fixing".

Such known fasteners are designed to be located in a hole which has been pre-drilled in hard material, eg brick or concrete, in order to securely fasten an article against the surface of the material in which the hole is drilled. A first type of these known fasteners generally employ a central shaft which is threaded at its outer end (which protrudes from the hole) and which has a tapered portion (which is located well inside the hole), the taper converging from the inner end (towards or at the bottom of the hole) towards the outer end of the fastener (the end outside the hole). The tapered portion is surrounded by an expansible sleeve, which may also extend axially beyond the taper. The expansible sleeve may be a one-piece sleeve with one or more longitudinal slits, or a group of two or more segments.

When a nut is screwed down the threaded outer end (with or without an article being first located around the central shaft) and tightened, the shaft is urged axially outwards of the hole such that the taper expands the sleeve into tight contact with the bore of the hole, thereby to secure the fastener in the material in which the hole is drilled.

An alternative form or second type of fastener with a similar function employs a bolt extending into an externally tapered nut surrounded by an expansible sleeve.

According to the present invention there is provided a fastener for mounting in a hole in material, the fastener having a shaft which is at least partially screw-threaded and which has along it in axial sequence:
an expander;
an expansible sleeve axially movable relative
to the expander;
a socket member providing an abutment to resist axial movement of the sleeve along the shaft;
the fastener terminating in an end face of the socket member, said end face having therein an internally screw-threaded socket.

Either or both of the expander and the socket may be mounted on the screw thread of the shaft, and either one or other of them may be formed as an integral part of the shaft.

The end of the socket member which is axially closer to the expander may be formed as an axial abutment for resisting axial movement of the expansible sleeve, the axial abutment preferably extending in a substantially radial plane. The end of the socket member which is axially closer to the expander in the assembly may alternatively be formed with a taper which converges towards the expander and which contacts or is contactable with the expansible sleeve which thereby undergoes double-ended expansion in use.

In use, the socket member is preferably rotatable in the hole whereby the socket member can be screwed towards the expander to expand the sleeve. The socket may be so rotated by means of a tool which does not normally form a part of the fastener but which is temporarily cooperable with the fastener to enable the socket to be rotated. Such a tool can be temporarily engaged with the socket (before or after the fastener is located in the hole in the material) in a manner which enables the tool to be rotated and such rotation of the tool to be transmitted to the socket so that the socket rotates relative to the expander. Preferably, a portion of the tool remains outside the hole to be rotated manually (eg by means of a handle) or by means of a handtool (eg by means of a spanner). Preferably, another portion of the tool engages the socket in a manner which avoids locking the tool to the socket and which preferably avoids substantive plastic deformation of the screw-thread of the socket. The tool and the socket may be adapted for such mutual engagement by forming mutually engaging portions thereof as respective mutually cooperable parts of a dog clutch; alternatively, the tool may be adapted for such mutual engagement by forming the socket-engaging portion of the tool as a screw-threaded means which can be screwed into the socket without binding to the socket or causing seizure of the engaged screw-threads, and which can be unscrewed from the socket substantially without reversing preceding movement of the socket towards the expander caused by rotation of the socket.

Embodiments of the invention will now be described by way of example, with reference to the accompanying drawings wherein:-
Fig. 1 is an elevation of a first embodiment of fastener in accordance with the invention;
Fig. 2 is an elevational view, to a reduced scale, of the disassembled components of the first embodiment;
Fig. 3 is an elevation of a second embodiment of fastener in accordance with the invention;
Fig. 4 is an elevational view of the disassembled components of the second embodiment;
Fig. 5 is an elevational view of the disassembled components of a third embodiment of fastener in accordance with the present invention;
Figs. 6-12 are representations of the second embodiment in use;
Fig. 13 is an elevational view of a first form of socket driver suitable for use with the fastener of the present invention, in association with a suitably modified form of the fastener of Fig. 3;
Figs. 14 and 15 are elevational views of second and third forms of socket driver, respectively;
Figs. 16, 17 and 18 correspond to Figs. 13, 14 and 15 respectively, and illustrate a variant thereof;
Fig. 19 is an elevational view of a seventh form of socket driver suitable for use with the fastener of the present invention, in association with an unmodified form of the fastener of Fig. 3;
Fig. 19A shows the seventh form of socket driver disassembled;
Figs. 20 and 20A correspond to Figs. 19 and 19A respectively, and illustrate an eighth form of socket driver; and
Figs. 21 and 21A correspond to Figs. 19 and 19A respectively, and illustrate a ninth form of socket driver.

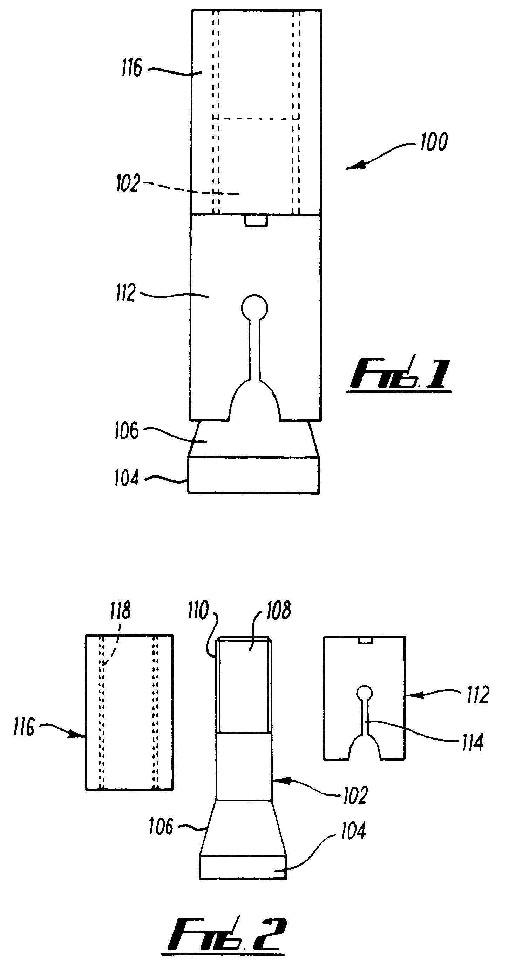

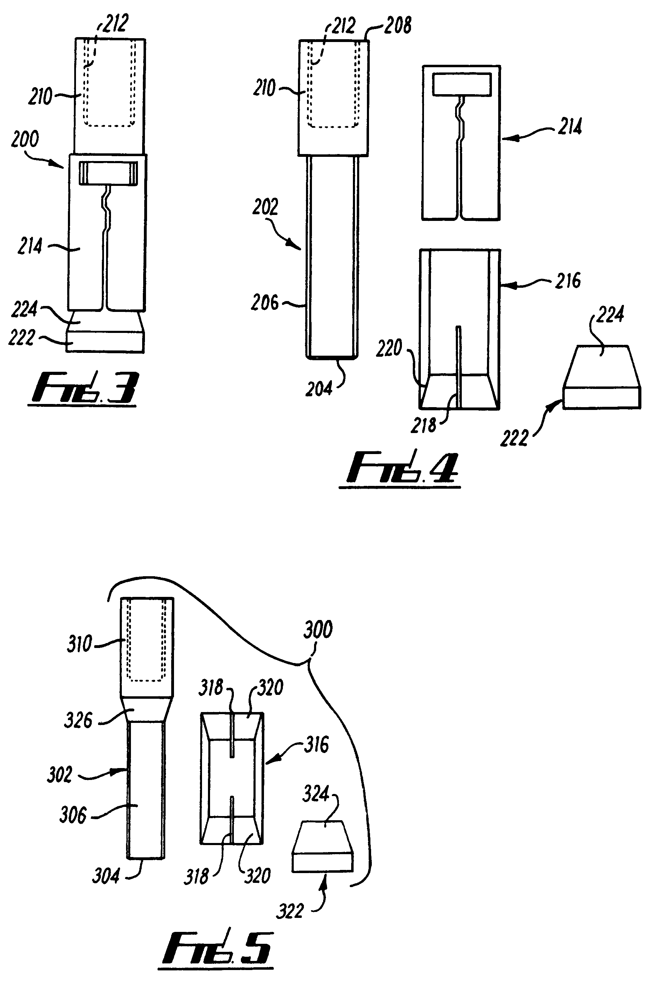

Referring first to Figs. 1 and 2, the first embodiment 100 of fastener in accordance with the invention comprises a central shaft 102 having one end 104 diametrally enlarged and formed with a taper 106 which converges towards the other end 108 of the shaft 102, which is formed with an external screw-thread 110.

An expansible sleeve 112 is fitted around the shaft 102 in the assembly 100 (Fig. 1). The sleeve 112 can take any suitable form, and may for example be a metal tube having one or more slits 114 extending axially part-way along the sleeve 112 from the end nearest the taper 106. A form of expansible sleeve suitable for use with the present invention is disclosed in our British Patent No GB2254901-B.

The fastener assembly 100 is completed by a tubular coupling 116 having an internal screw-thread 118 which is mechanically compatible with the thread 110.

To form the fastener assembly 100 (Fig. 1) from its individual components 102, 112, and 116 (Fig. 2), the sleeve 112 is placed on the shaft 102, with the open end(s) of the slit(s) 114 next to the taper 106. Next, the coupling 116 is screwed onto the threaded end 108 of the shaft 102 until the coupling 116 has about half of its length threaded onto the shaft 102. In this ready-to-use configuration of the assembly 100, the slit end of the sleeve 112 is no more than lightly in contact with the taper 106, and insufficient force is exerted on the sleeve 112 by abutment against the adjacent end of the coupling 116 to cause any expansion of the sleeve 112 (which expansion would be premature at this stage).

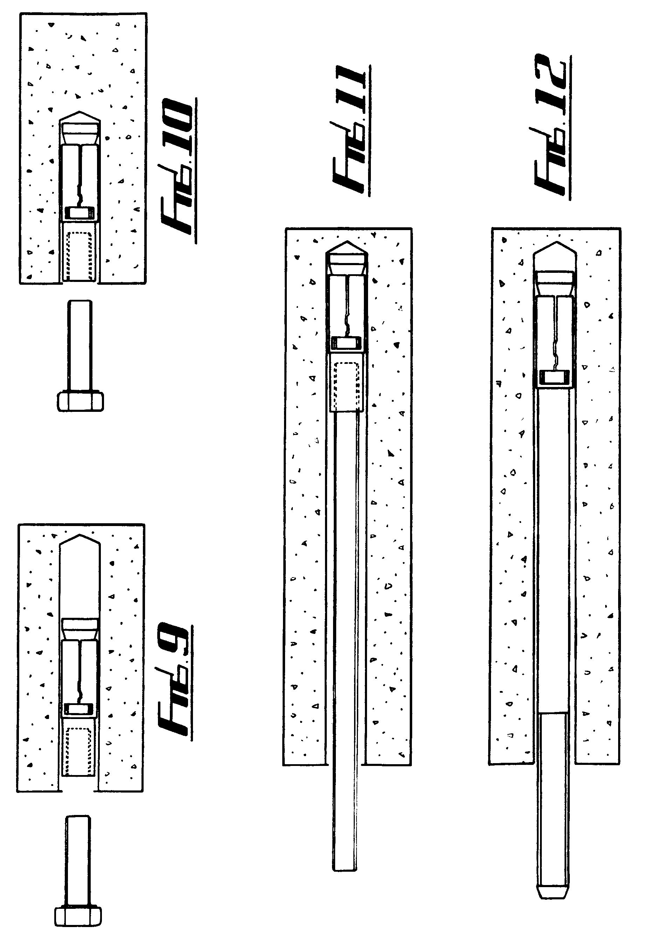

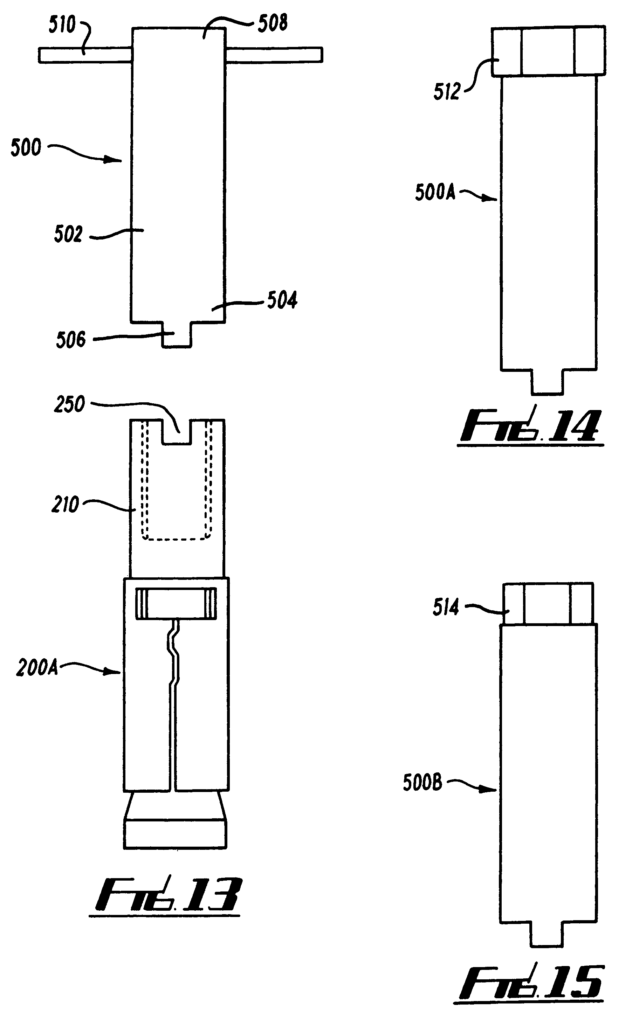

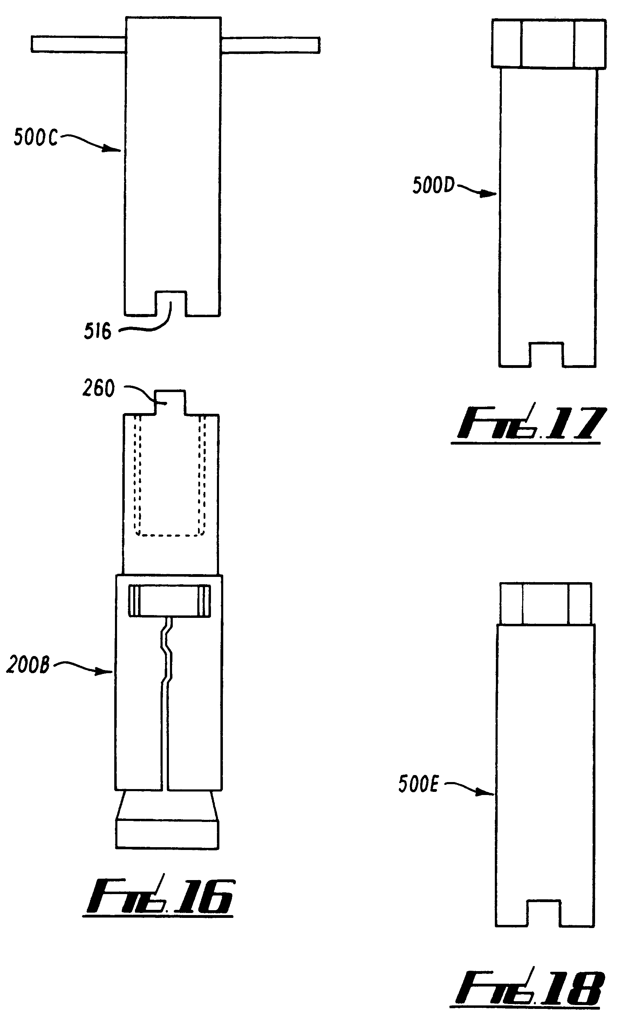

Use of the fastener 100 will subsequently be described with reference to Figs. 6-12.

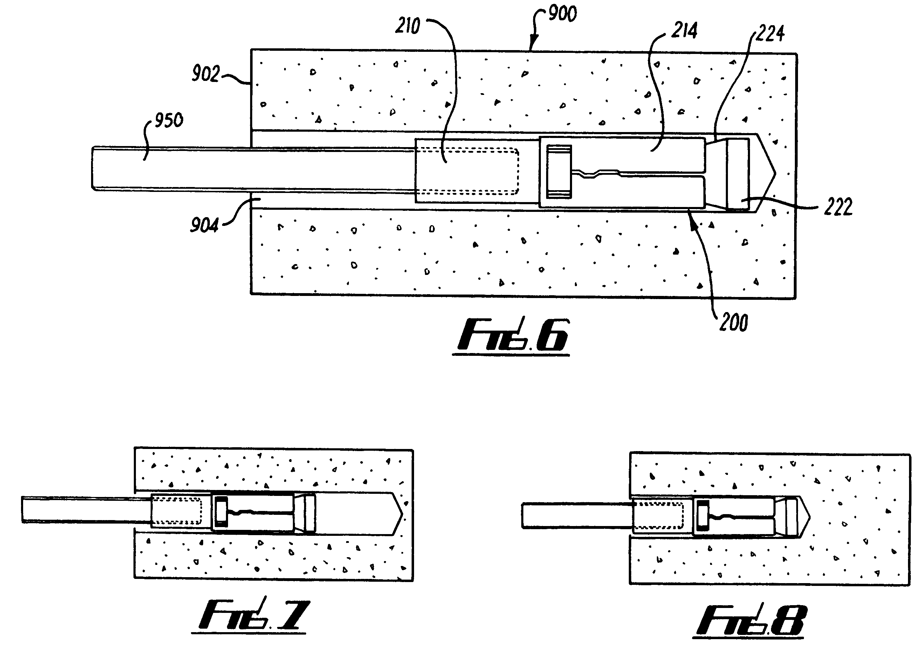

Referring now to Figs. 3 and 4, the second embodiment 200 of fastener in accordance with the invention comprises a central shaft 202 having one end 204 formed with an external screw-thread 206. The other end 208 of the shaft 202 is formed as a socket 210 having an internal screw-thread 212. The external diameter of the socket 210 exceeds the outside diameter of the rest of the shaft 202. The socket 210 is preferably formed integrally with the remainder of the shaft 202, but the socket and shaft may initially be formed as separate components which are subsequently mutually bonded, eg by welding.

An expansible sleeve 214 is fitted around the shaft 202 in the assembly 200 (Fig. 3). The sleeve 214 can take any suitable form, and may be the same as the sleeve 112 or different therefrom. The sleeve 214 is schematically depicted in Figs. 3 and 4 as being one of the forms shown in our British Patent No GB2254901-B. An alternative form of sleeve 216 is additionally depicted (in longitudinal section) in Fig. 4, the alternative sleeve 216 being in the form of a cylindrical metal tube having slits 218 extending axially part-way along the length of the sleeve 216 from one end, that end also being provided with an internal chamfer 220.

The fastener assembly 200 is completed by a nut 222 externally formed with a taper 224. The internal screw-thread (not visible) formed in the nut 222 is mechanically compatible with the screw-thread 206 on the shaft 202.

To form the fastener assembly 200 (Fig. 3) from its individual components 202, 214 and 222 (Fig. 4), the sleeve 214 (or, alternatively, the sleeve 216) is placed on the shaft 202, with the unslit end of the sleeve 214 (or 216) abutting the adjacent end of the socket 210. Next, the nut 222 is screwed onto the thread 206 on the externally threaded end 204 of the shaft 202, with the taper 224 adjacent the previously located sleeve 214 (or 216). The nut 222 is screwed up the shaft 202 until the taper 224 is close to or just touching the slit end of the sleeve 214 (or 216), but no further, so as to avoid premature expansion of the sleeve 214 (or 216).

Use of the fastener 200 will subsequently be described with reference to Figs. 6-12.

Referring now to Fig. 5, this illustrates the individual components of the third embodiment of fastener 300 in accordance with the present invention. The fastener 300 is a modification of the fastener 200 and the following description will concentrate on those parts of the fastener 300 which differ from the fastener 200. Parts of the fastener 300 which are equivalent or analogous to like parts of the fastener 200 will be given the same reference numeral, but with the leading "2" replaced by a "3" (ie some Fig. 5 references will be the Figs. 3 and 4 references plus 100). For a description of any aspect of the fastener 300 not detailed below, reference should be made to the foregoing description of the respective aspect of the fastener 200.

The principal difference in the fastener 300 with respect to the fastener 200 is the use of a double-ended expansible sleeve 316, and a consequential modification of the shaft 302. The sleeve 316 (depicted in longitudinal section) has slits 318 extending from both ends axially less than half-way along the length of the sleeve 316, and both ends are provided with a respective internal chamfer 320.

The taper 324 on the nut 322 will (in use of the fastener 300) expand the adjacent end of the sleeve 316 (the lower end as viewed in Fig. 5), whereas to expand the other (upper) end of the sleeve 316, the transition between the socket 310 and the threaded part 306 of the shaft 302 is formed with a taper 326 which preferably matches the taper 324.

Use of the fastener 300 is essentially similar to use of the fastener 200, which use will be described below.

Referring now to Fig. 6, this illustrates use of the fastener in accordance with the invention. By way of example, Fig. 6 shows the fastener 200, but the other fasteners (100; 300) may be substituted without substantially affecting the fastener setting procedure as described below. Some practical differences exist between the fasteners 100 and 200 (or 300) with regard to setting, and such differences will be referred to below. (Once such differences are allowed for, essential similarities of the different embodiments will be manifest).

Hard material 900 (eg concrete which has previously set) presents an external surface 902 against which an article (not shown) is to be secured by use of a fastener in accordance with the invention. To this end, a hole 904 is drilled or otherwise formed in the material 900 to extend perpendicularly inwards from the surface 902 for a suitable depth. (The present invention is particularly suited for use in holes of widely varying depths, as will subsequently be referred to).

A length of externally screw-threaded studding 950 is screwed into the thread 212 inside the socket 210 on the fastener 200 (assembled as in Fig. 3). Using the free end of the studding 950, the attached fastener 200 is inserted into the hole 904 until the fastener is at a suitable depth. Although shown in Fig. 6 to have a clearance from the bore of the hole 904, the sleeve 214 and/or the nut 222 will in practice be contacting the surrounding material 900 sufficiently to impede rotational movement of these parts. Consequently, the subsequent setting step of rotating the studding 950 will cause the socket 210 and the central shaft 202 of the fastener to rotate relative to the nut 222 and (assuming the studding 950 to be rotated in the appropriate rotational direction) thereby pull the nut 222 along the thread 206 towards the socket 210. The nut taper 224 engages the expansible sleeve 214 and thereby expands the sleeve 214 into tight engagement with the material 900 surrounding and defining the hole 904. This procedure locks the fastener 200 in place within the material 900, leaving the outer end of the studding 950 proud of the hole 904 and projecting beyond the surface 902 sufficiently for the subsequent clamping of the article to the surface 902.

An alternative setting procedure for the fastener 200 involves following the above procedure up to but not including the step of rotating the studding 950, and then pulling the studding 950 axially outwards of the hole 904, thereby also pulling the fastener 200 in a direction axially outwards of the hole 904. As the sleeve 214 drags on the bore of the hole 904, the nut 222 (being pulled outwards on the inner end of the central shaft 202) tends to enter the sleeve 214 and thereby cause the sleeve 214 to expand into anchoring contact with the material 900 surrounding and defining the hole 904. The outward pull necessary to perform this alternative fastener setting procedure may be applied by any suitable means, for example by fitting a washer (not shown) and then a nut (not shown) on the outer end of the studding 950, and thereupon tightening the nut (through the intervening washer) against the face 902 until the fastener 200 is set.

The fastener setting procedure described above with reference to Fig. 6 was detailed with respect to the fastener 200 (Fig. 3). The setting procedure utilising the fastener 300 (Fig. 5) is not substantially different.

The procedure for setting the fastener 100 (Fig. 1) is the same as described above in respect of the fasteners 200 and 300, except that in place of the studding 950, use is made of a bolt (not illustrated) formed or adapted such that it can screw into the previously unoccupied outer end of the coupling 116 only to the limited extent necessary to withstand subsequent tensile loading. Such a bolt may be a shoulder bolt comprising a short length of screw thread (dimensioned to be mechanically compatible with the thread 118) on the end of a larger diameter threadless shaft which thereby provides an abutment to prevent over-insertion into the coupling 116. Alternatively, the studding 950 could be adapted by fixing a collar or a locknut at a suitable distance from the inner end of the studding, or by screwing the studding 950 a suitable distance into the coupling 116 and then mutually locking the studding 950 and the coupling 116, for example by means of welding, adhesive, a locking screw, or a transverse pin.

Once the bolt or studding (of whatever suitable form) is locked (by whatever suitable means) in the outer end of the coupling 116, subsequent rotation of (or outward pull on) the bolt or studding will cause the fastener 100 to anchor within the hole 904 in the manner described above with reference to Fig. 6 in respect of the fastener 200.

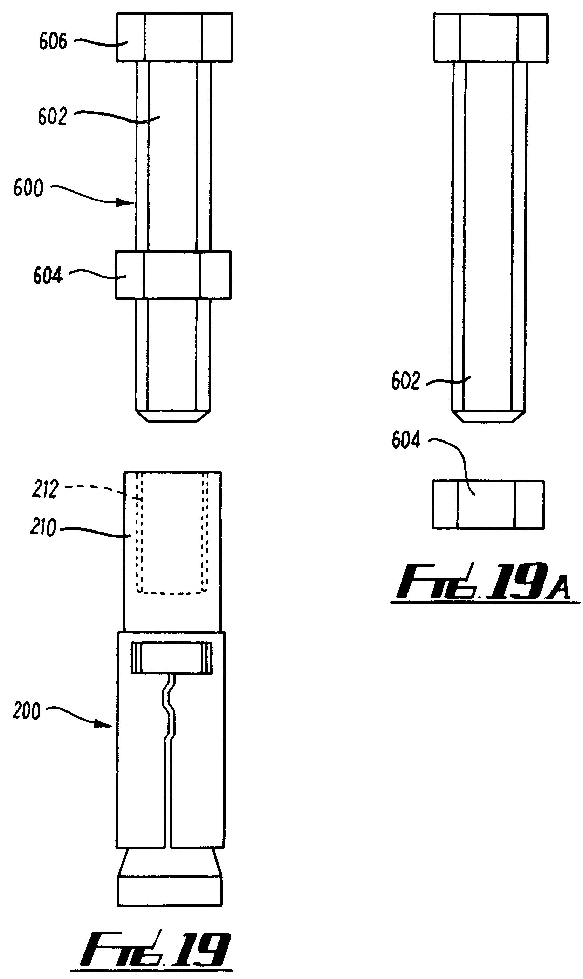

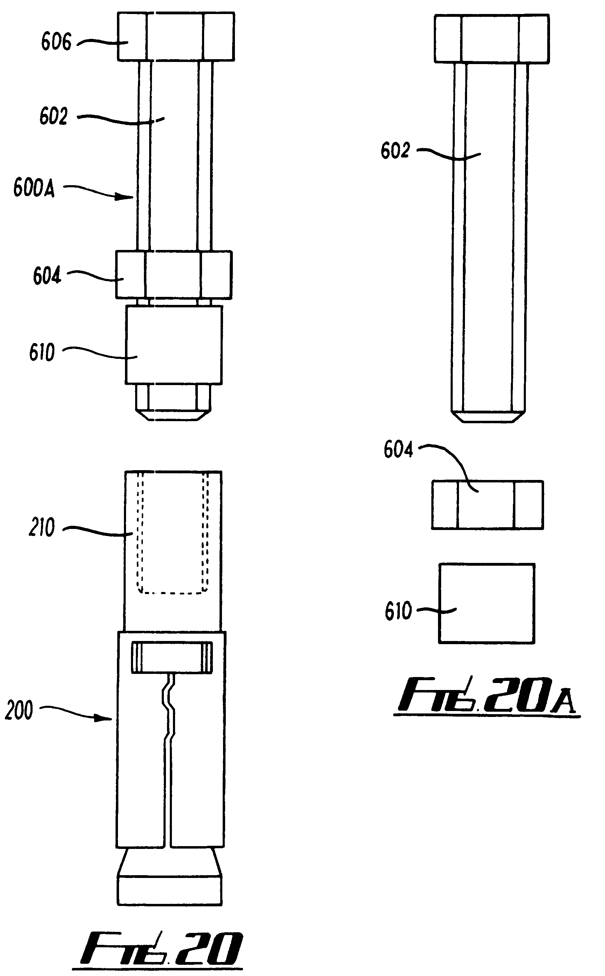

Fig. 6 demonstrates the advantageous ability of fasteners in accordance with the invention to be set at depths exceeding those typical for conventional anchorages. Fig. 7 shows the equivalent fastener setting procedure applied at a conventional depth, and Fig. 8 shows the fastener setting procedure applied at a relatively shallow depth.

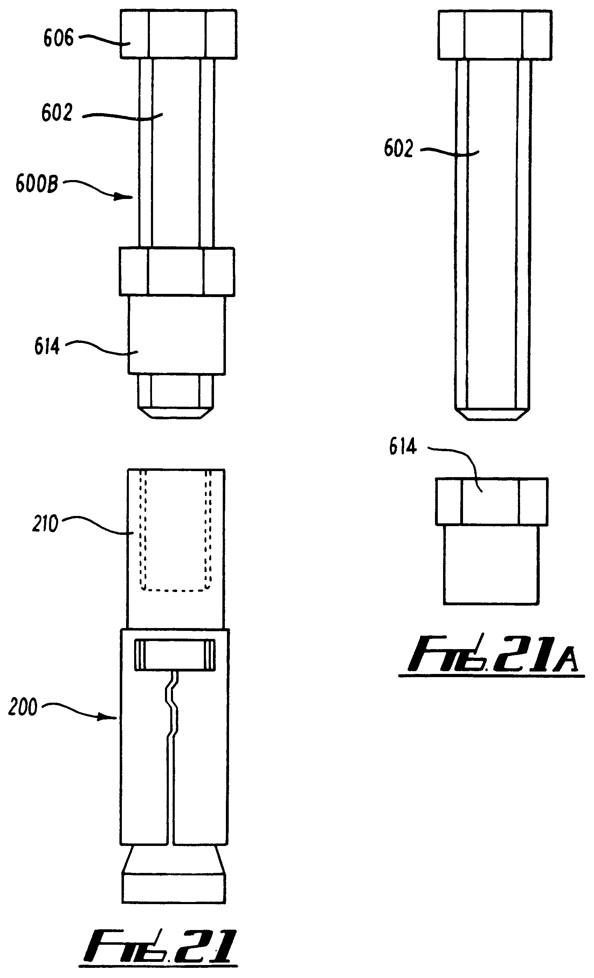

Figs. 9 and 10 correspond to Figs. 7 and 8 respectively, but with the studding substituted by bolts.

Fig. 11 shows the fastener deeply embedded in the material, thus allowing strong anchorage in materials which lack suitable properties near the surface but which strengthen with depth. It is to be particularly noted that the depth at which a fastener in accordance with the invention can be set is limited only by the length of studding (or the length of the shoulder bolt) that is available to the installer.

Fig. 12 illustrates a further modification of the second embodiment, in which the socket is axially lengthened and fitted with a stud whose inner end has the same diameter and thread as before, but whose threaded outer end has a larger diameter.

Referring now to Fig. 13, this illustrates a tool 500 in the form of a socket driver for setting one of the previously described fasteners (100; 200; 300). The tool or socket driver 500 is utilised in place of the studding 950 previously described with reference to Fig. 6.

The socket driver 500 comprises an externally cylindrical shaft 502 of length suitable to reach the fastener at its setting depth within the hole (not shown in Fig. 13) while leaving a sufficient portion of the shaft 502 protruding from the hole for the shaft 502 to be suitably manipulated.

By way of example, Fig. 13 illustrates a modified form 200A of the fastener 200 previously described with reference to Fig. 3.

The modification of the standard fastener 200 to form the modified fastener 200A comprises a deep square-sided transverse slot 250 formed across the open end of the socket 210 (the end which is hollow, internally threaded, and closest to the surface of the material in which the fastener 200A is to be set). The slot 250 may also be regarded as a pair of notches in the rim of the socket 210, ie the diametral slot interrupted by the internal hollow of the socket 210.

The socket driver shaft 502 is formed at one end 504 with a longitudinally protruding square-sided key 506 disposed on a diameter of the shaft 502 and dimensioned for cooperation with the slot 250 in the fastener 200A. It will be noted that the diameter of the shaft 502 is about the same as the external diameter of the socket 210 of the modified fastener 200A.

The end 508 of the socket driver shaft 502 opposite the key 506 is provided with a handle 510 of any suitable form (shown by way of example as a tommy bar).

To instal the fastener 200A, it is inserted into the previously drilled hole, and pushed to a suitable depth by any suitable means, conveniently by use of the socket driver 500. Next, the end 504 of the socket driver 500 is inserted into the hole (if not already so located) and the key 506 is engaged with the socket slot 250 in the manner of a dog clutch. Suitable manipulation of the handle 510 turns the socket driver 500 about the longitudinal axis of its shaft 502, and consequently rotates the socket 210. This tightens and locks the fastener 200A within the hole as previously described with reference to Fig. 6 (rotation of the tool 500 and of the studding 950 being mutually equivalent in the described circumstances). Thereafter, the socket driver 500 is axially withdrawn from the hole to leave the fastener 200A set in place and ready for use.

In a manner analogous to the use of a screwdriver on numerous screws, a single socket driver 500 can be utilised for the successive installation of numerous specimens of the fastener 200A.

Fig. 14 illustrates a socket driver 500A which is fabricated and utilised in the same way as the socket driver 500 (Fig. 13), except that the handle 510 is replaced by a hexagonal head 512 for engagement by a separate spanner (not shown).

Fig. 15 illustrates another socket driver 500B which is largely the same as the socket driver 500A (Fig. 14) except that the socket driver 500B has a hexagonal head 514 which is undersized with respect to the cross-section of the socket driver shaft 502 whereas in the socket driver 500A the head 512 was conversely oversized with respect to the shaft 502.

Figs. 16, 17 and 18 respectively illustrate socket drivers 500C, 500D and 500E corresponding respectively to the socket drivers 500, 500A and 500B (Figs. 13, 14 and 15 respectively), except that the respective locations of the key 506 and the slot 250 are mutually interchanged. The fastener ('200B' in Fig. 16) is thus similar to the fastener 200 (Fig. 3) except for the provision of two axially projecting dogs 260 which correspond to a diametral key interrupted by the internal hollow of the socket 210. Correspondingly, the socket driver 500C (Fig. 16) is similar to the socket driver 500 (Fig. 13) except for a deep square-sided transverse slot 516 in the shaft end 504, in place of the key 506.

The socket drivers described above have the potential disadvantage of requiring appropriate modification of fasteners which are otherwise adequate to their task of fastening. Such modification represents extra cost and complexity in the fastener, with consequent benefit if the need for such modification can be obviated. Various further forms of socket driver will now be described, which further forms are suitable for use with unmodified fasteners.

In Fig. 19, a socket driver 600 suitable for use with an unmodified fastener 200 (shown by way of example as the fastener of Fig. 3) comprises an assembly of an externally threaded screw 602 and an internally threaded nut 604. (The screw 602 and the nut 604 are shown mutually separated in Fig. 19A). The external thread on the screw 602 is compatible with the internal screw-thread 212 in the socket 210.

To use the socket driver 600, the nut 604 is screwed onto and suitably far up the screw 602. The screw 602 is then screwed into the socket 210 to a depth which ensures adequate engagement but without jamming, and the nut 604 is driven down the screw 602 to tighten against the end of the socket 210 as a lock-nut. A hexagonal head 606 on the screw 602 allows the fastener to be installed and set. (Compare the socket driver 600 with the socket driver 500A of Fig. 14).

The nut 604 may be pre-located and locked on the screw 602 at a position which ensures the correct penetration of the screw 602 into the socket 210 when the nut 604 contacts the end of the socket 210.

A potential difficulty with the relatively simple socket driver 600 lies in the nut 604 having peripheral dimensions which cause it to extend radially beyond the outside diameter of the socket 210, so interfering with the material surrounding the hole in which the fastener 200 is to be installed. Such a difficulty can be avoided by modifying the socket driver 600 to form the socket driver 600A shown in Fig. 20 (and dis-assembled in Fig. 20A). The modification consists of a collar or sleeve 610 which has a bore dimensioned to be a loose sliding fit over the external thread of the screw 602.

The outside diameter of the collar 610 is not greater than the outside diameter of the socket 210, and the length of the collar 610 is such that the nut 604 will be sufficiently distanced from the socket 210 when the socket driver 600A is fully connected as to allow the fastener 200 to be inserted to its requisite depth. By making the collar 610 removable from the screw 602, it can be replaced by another collar (not shown) of a different length suited to different circumstances, eg a different depth of insertion.

Figs. 21 and 21A correspond to Figs. 20 and 20A respectively, and illustrate a socket driver 600B which is modified from the socket driver 600A in that the previously separate nut 604 and collar 610 are now provided as a unitary component 614.

In the socket drivers 600, 600A, and 600B, once the fastener (200) is fully set, the socket driver is separated from the fastener, without loosening the fastener, by suitable relative rotation of the screw and the nut.

While certain modifications and variations have been described above, the invention is not restricted thereto, and other modifications and variations can be adopted without departing from the scope of the invention.

## Claims

**1.** A fastener for mounting in a hole in material, the fastener having a shaft which is at least partially screw-threaded and which has along it in axial sequence:
an expander;
an expansible sleeve axially movable relative
to the expander;
a socket member providing an abutment to resist axial movement of the sleeve along the shaft;
the fastener terminating in an end face of the socket member, said end face having therein an internally screw-threaded socket.

**2.** A fastener as claimed in Claim 1 wherein either or both of the expander and the socket member are mounted on the screw-thread of the shaft.

**3.** A fastener as claimed in Claim 1 wherein one or other of the expander and the socket is formed as an integral part of the shaft.

**4.** A fastener as claimed in any preceding Claim wherein the end of the socket member which is axially closer to the expander is formed with a taper which is contactable with the expansible sleeve.

**6.** A fastener as claimed in any preceding Claim wherein the expander extends partially within the sleeve.

**7.** A fastener as claimed in any preceding Claim wherein said end face of the socket member is recessed for receiving corresponding projections of a tool for rotating the socket member.
